# EUROPÄISCHE PATENTSCHRIFT

(11) **EP 1 627 440 B1**
(45) Veröffentlichungstag und Bekanntmachung des Hinweises auf die Patenterteilung: **27.10.2010**
(21) Anmeldenummer: 04727264.6
(22) Anmeldetag: 14.04.2004
(51) Int. Cl.: H01M 8/02

(54) **BIPOLARPLATTE UND BRENNSTOFFZELLE MIT EINER DERARTIGEN BIPOLARPLATTE**
BIPOLAR PLATE AND FUEL CELL COMPRISING SUCH A BIPOLAR PLATE
PLAQUE BIPOLAIRE ET PILE A COMBUSTIBLE COMPRENANT UNE TELLE PLAQUE BIPOLAIRE

(30) Priorität: 26.05.2003 DE 10323880
(43) Veröffentlichungstag der Anmeldung: 22.02.2006
(73) Patentinhaber: SIEMENS AKTIENGESELLSCHAFT, 80333 München (DE)
(72) Erfinder: HAMMERSCHMIDT, Albert, 91056 Erlangen (DE)
(86) Internationale Anmeldenummer: PCT/EP2004/003922
(87) Internationale Veröffentlichungsnummer: WO 2004/107485

(56) Entgegenhaltungen:
- EP-A- 1 117 142
- US-A1- 2001 026 884
- US-B1- 6 232 010

## Beschreibung

Die Erfindung betrifft eine Bipolarplatte für Brennstoffzellen und weiterhin eine Brennstoffzelle mit einer derartigen Bipolarplatte.

Brennstoffzellen gewinnen immer mehr an Bedeutung in zukunftsweisenden Konzepten für die Energieerzeugung. Insbesondere Niedertemperatur-Brennstoffzellen auf Basis der Polymer-Elektrolyt-Membran-(PEM)-Technologie werden als umweltfreundliche und effiziente Energiewandler für portable, mobile und stationäre Anwendungen diskutiert und finden bereits erste kommerzielle Verwendungen. Niedertemperatur-Brennstoffzellen setzen bei Temperaturen von kurz über dem Gefrierpunkt bis ca. 90°C Wasserstoff und Sauerstoff in elektrischen Gleichstrom um, als einziges Nebenprodukt entsteht dabei Wasser.

Wesentliches Element einer PEM-Einzelzelle ist eine Membranelektrodeneinheit. Diese besteht aus zwei Elektroden (einer Anode und einer Kathode) und einer sich zwischen den beiden Elektroden befindlichen Elektrolytmembran. Zwischen den Elektroden und der Elektrolytmembran befindet sich eine Katalysatorschicht, in der die wichtigen physikalischen und elektrochemischen Vorgänge, wie Adsorption von Wasserstoff und Sauerstoff am Katalysator, Abgabe und Aufnahme von Elektronen und die Bildung von Wasser kathodenseitig durch Kombination von durch die Membran diffundierten Protonen und (reduziertem) Sauerstoff erfolgen.

Wasser bzw. Feuchtigkeit ist in der Brennstoffzelle aus mehreren Gründen vorhanden: Zum einen entsteht es kathodenseitig als Produktwasser, daneben kann es von der Kathoden- auf die Anodenseite aufgrund eines Konzentrationsgefälles diffundieren. Ein weiterer wichtiger Grund für das Vorhandensein von Wasser ist, dass die Medien Wasserstoff und Sauerstoff bis auf 100 % reine Feuchtigkeit befeuchtet werden müssen, denn nur dadurch ist eine gute Protonenleitfähigkeit und eine entsprechende Langzeitstabilität der verwendeten protonenleitenden Membran gegeben.

Durch die Elektroden werden die an der Reaktion beteiligten Gase geleitet; gleichzeitig jedoch muss das gasförmige und insbesondere flüssiges Wasser, welches im Brennstoffzellenbetrieb gebildet bzw. durch den Befeuchtungsprozess der Gase in die Brennstoffzelle eingebracht wird, in kürzester Zeit durch die Elektroden von der elektrochemisch aktiven Katalysatorschicht weg und aus der Zelle transportiert werden.

In einem Brennstoffzellenstapel befinden sich die Elektroden an der der Elektrolytmembran bzw. Katalysatorschicht abgewandten Seite in Kontakt mit jeweils einer sogenannten Bipolarplatte oder Kühleinheit. Dieses Bauteil hat die Aufgabe, die einzelnen Brennstoffzellen (medienseitig) zu trennen, für Stromfluss im Zellstapel zu sorgen und die Reaktionswärme zu entfernen. Um einen effektiven Stromfluss zu gewährleisten, bestehen die Bipolarplatten aus einem elektrisch leitendem Material, welches einen niedrigen Übergangswiderstand zu den Elektroden aufweisen muss.

Liegen bei Brennstoffzellen geringe Strömungsgeschwindigkeiten der Betriebsgase Wasserstoff und Sauerstoff bzw. Luft in der Brennstoffzelle vor, wie dies insbesondere bei Brennstoffzellen mit Sauerstoffbetrieb, und hierbei wiederum insbesondere im Teillastbetrieb, der Fall ist, ergibt sich das Problem, dass Wasser nicht zuverlässig aus der Brennstoffzelle transportiert werden kann, da es an der Oberfläche der Bipolarplatte haften bleibt und durch den Gasstrom nicht aus der Brennstoffzelle herausgeblasen werden kann. Hierdurch kann der Stromfluss zwischen der Bipolarplatte und den Elektroden und damit die Leistungsfähigkeit der Brennstoffzelle beeinträchtigt werden.

Die US 2001/0026884A1 offenbart eine Bipolarplatte für Brennstoffzellen, wobei die Bipolarplatte an ihrer Oberfläche mit einer Schicht aus einem hydrophobierenden Material versehen ist, das ganz oder teilweise aus einem amorphen Fluoropolymer besteht.

Die EP 1 117 142 A1 offenbart ebenfalls eine Bipolarplatte für Brennstoffzellen, bei der die Bipolarplatte an ihrer Oberfläche mit einer Schicht aus einem hydrophobierenden Material versehen ist. Zur Herstellung dieser Oberflächenschicht wird entweder eine Fluoropolymer-Dispersion oder eine in einem Lösemittel gelöste Silanverbindung auf die Oberfläche aufgebracht.

Ausgehend hiervon ist es Aufgabe vorliegender Erfindung, eine Bipolarplatte derart zu verbessern, dass Wasser auch bei nur geringen Strömungsgeschwindigkeiten der Betriebsgase sicher aus der Brennstoffzelle entfernt werden kann, wobei sich der Übergangswiderstand zwischen der Bipolarplatte und einer anliegenden Elektrode allerdings nicht oder nur wenig verschlechtern soll.

Die Lösung dieser Aufgabe gelingt erfindungsgemäß durch die Lehre des Patentanspruchs 1. Eine Brennstoffzelle mit einer derartigen Bipolarplatte ist Gegenstand des Patentanspruchs 7. Vorteilhafte Ausgestaltungen sind jeweils Gegenstand der Unteransprüche.

Durch die erfindungsgemäß auf der Oberfläche der Bipolarplatte vorgesehenen Schicht aus einem hydrophobierenden Material bildet Wasser, das mit der Bipolarplatte in Kontakt kommt, kleine Tröpfchen, die nur locker auf der Bipolarplatte sitzen und somit bei nur geringer Strömungsgeschwindigkeit eines vorbeiströmenden Gases von dem Gasstrom mitgenommen und aus der Brennstoffzelle entfernt werden können.

Aufgrund seiner Lösbarkeit in einem Lösemittel kann das hydrophobierende Material in gelöstem Zustand durch ein einfaches und übliches Aufbringverfahren wie Sprühen, Wischen, Pinseln, Tauchen, Drucken etc. auf die Bipolarplatte aufgebracht werden. Nach dem Verdampfen des Lösemittels und einer ggf. Immobilisierung des verbleibenden Materials durch einen Temperaturschritt bei erhöhter Temperatur verbleibt die gewünschte Schicht aus dem hydrophobierendem Material auf der Oberfläche der Bipolarplatte.

Mit Hilfe der Konzentration des hydrophobierenden Materials in dem Lösemittel kann auf einfache Weise die Dicke der hydrophoben Schicht und damit deren Hydrophobizität und der elektrische Übergangswiderstand zwischen der Bipolarplatte und einer anliegenden Elektrode eingestellt werden. Eine geringe Konzentration des hydrophobierenden Materials in dem Lösemittel führt zu einer Schicht mit geringer Hydrophobizität und nahezu gleichbleibendem elektrischen Übergangswiderstand. Eine höhere Konzentration des hydrophobierenden Materials ergibt eine entsprechend dickere Schicht mit entsprechend höherer Hydrophobizität, allerdings auch eine Verschlechterung des elektrischen Übergangswiderstand.

Ein gewünschter niedriger elektrischer Übergangswiderstand wird hierbei alleine durch die Konzentration des hydrophoberenden Materials in dem Lösemittel und die sich daraus einstellende Schichtdicke erzielt; zusätzliche metallene Anteile in der Schicht zur Senkung des Übergangswiderstandes sind nicht notwendig und auch nicht vorgesehen.

Das hydrophobierende Material besteht dabei ganz oder teilweise aus einem amorphen Fluoropolymer. Amorphe Fluoropolymere, z.B. amorphe Modifikationen von Teflon, können bereits in geeigneten Lösemitteln gelöst bezogen und vor Gebrauch auf eine optimale Konzentration verdünnt werden.

Um gleichzeitig eine nur geringe Beeinflussung des Übergangswiderstandes zwischen den Elektroden und der Bipolarplatte sowie eine gute Entfernung von Wasser aus der Brennstoffzelle zu erzielen, ist nach einer vorteilhaften Ausgestaltung der Erfindung vorgesehen, dass die Dicke der Schicht aus dem hydrophobierenden Material auf ein Optimum zwischen einem niedrigen elektrischen Übergangswiderstand zu einer anlegenden Elektrode und einer hohen dauerhaften Hydrophobizität eingestellt ist.

Ein niedriger Übergangswiderstand und eine gleichzeitig gute Hydrophobizität der Schicht ist dadurch erzielbar, dass die hydrophobe Schicht eine Dicke im Bereich von 0,1 nm bis 50 nm, insbesondere im Bereich 0,5 nm bis 5 nm, aufweist.

Eine Verringerung des Übergangswiderstandes zwischen der Bipolarplatte und der Elektrode ist noch dadurch möglich, dass zwischen der Bipolarplatte und der Schicht aus dem hydrophobierenden Material eine hochleitfähige Kontaktschicht aus einem Edelmetall, insbesondere aus Gold, vorgesehen ist.

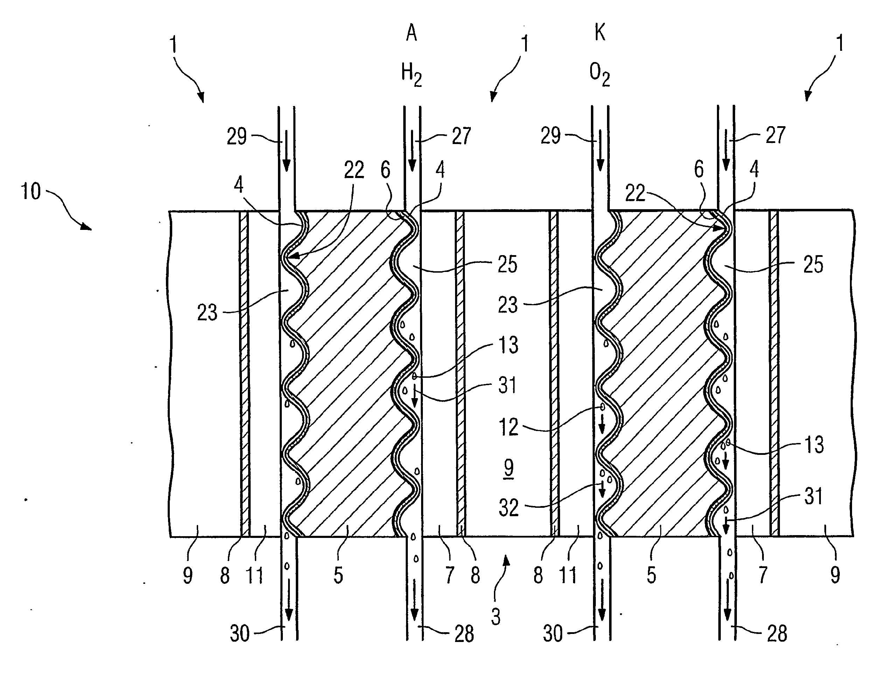

Die Erfindung, sowie weitere vorteilhafte Ausgestaltungen der Erfindung gemäß Merkmalen der Unteransprüche, werden im Folgenden anhand eines Ausführungsbeispiels in der Figur näher erläutert.

Die Figur zeigt in schematischer und vereinfachter Darstellung einen Schnitt durch einen Stapel 10 von Niedertemperatur-Brennstoffzellen 1. Der Stapel 10 umfasst mehrere, jeweils abwechselnd aufeinandergestapelte Bipolarplatten 5 und Membran-Elektroden-Einheiten 3. Die Membran-Elektroden-Einheiten 3 bestehen jeweils aus einer Anode 7, einer Polymer-Elektrolyt-Membran 9 und einer Kathode 11. Zwischen der Anode 7 bzw. Kathode 11 und der Membran 9 befindet sich jeweils eine Katalysatorschicht 8. Die Anoden 7 und Kathoden 9 bestehen vorzugsweise aus Kohlepapier. Eine Bipolarplatte 5 kann auch als Kühlkarte ausgebildet sein und hierzu einen von Kühlwasser durchspülten Hohlraum aufweisen.

Die Bipolarplatten 5 bestehen vorteilhafterweise aus einer Metalllegierung, insbesondere einer Nickelbasislegierung oder einer Kupferlegierung, und weisen dadurch eine gute elektrische Leitfähigkeit auf.

Die Bipolarplatten 5 weisen auf ihrer Oberfläche Erhebungen 22 auf. Hierdurch werden zwischen einer Kathode 11 und einer anliegenden Bipolarplatte 5 Kathodengasräume 23 gebildet, die untereinander jeweils in Verbindung stehen (nicht dargestellt) und einen Durchfluss und eine Ausbreitung von Sauerstoff oder Luft über die gesamte Fläche der Kathode ermöglichen. In entsprechender Weise werden Anodengasräume 25 zwischen einer Anode 7 und einer anliegenden Bipolarplatte 5 gebildet, wobei die Anodengasräume 25 jeweils miteinander in Verbindung stehen (nicht dargestellt) und eine Ausbreitung von Wasserstoff über die gesamte Fläche der Anode ermöglichen. An den Stellen, an denen sich die Bipolarplatte 5 in direktem Kontakt mit einer Anode 7 oder Kathode 11 befindet, findet der elektrische Stromfluss zwischen den beiden Bauteilen statt.

Während des Betriebs einer Brennstoffzelle 1 strömt befeuchteter Wasserstoff über einen Zufuhrkanal 27 in den Anodengasraum 25 und wird über einen Abfuhrkanal 28 wieder aus der Brennstoffzelle 1 abgeführt. Außerdem strömt mit Wasser befeuchteter Sauerstoff oder Luft über einen Zufuhrkanal 29 in den Kathodengasraum 23 und wird über einen Abfuhrkanal 30 aus der Brennstoffzelle 1 abgeführt.

Die Bipolarplatten 5 weisen elektrodenseitig an ihrer Oberfläche eine Schicht 4 aus einem in einem Lösemittel lösbaren hydrophobierenden Material auf. Vorzugsweise besteht diese Schicht 4 ganz oder teilweise aus einem amorphen Fluoropolymer, insbesondere einer amorphen Modifikation von Teflon (beispielsweise einem amorphen Copolymer aus 65 - 99 Mol % Perfluoro-2,2-Dimethyl-1,3-Dioxol mit einer Komplementärmenge von Tetrafluorethylen, von DuPont Fluoroproducts unter dem Produktnamen Teflon^{®}AF erhältlich).

Zur Verbesserung des Übergangswiderstandes zwischen der Bipolarplatte 5 und der anliegenden Anode 7 bzw. Kathode 11 befindet sich zusätzlich zwischen der hydrophoben Schicht 4 und der Bipolarplatte 5 eine hochleitfähige Kontaktschicht 6 aus einem Edelmetall.

Durch das im Brennstoffzellenbetrieb entstehende bzw. durch den Befeuchtungsprozesse der Gase in die Brennstoffzelle 1 eingebrachte Wasser kommt die Bipolarplatte 5 sowohl kathodenseitig als auch anodenseitig in Kontakt mit Wasser. Aufgrund der Hydrophobizität der Schicht 4 auf der Oberfläche der Bipolarplatte 5 bildet das Wasser kleine und leicht von der Oberfläche lösbare Tröpfchen 12, 13. Die kathodenseitigen Tröpfchen 12 können auch bei nur geringer Strömungsgeschwindigkeit des Sauerstoffes oder der Luft im Kathodengasraum 23 in Strömungsrichtung 32 aus diesem transportiert und über den Abfuhrkanal 30 aus der Brennstoffzelle entfernt werden. In entsprechender Weise können die anodenseitigen Tröpfchen 13 auch bei nur geringer Strömungsgeschwindigkeit des Wasserstoffes im Anodengasraum 25 in Strömungsrichtung 31 aus diesem transportiert und über den Abfuhrkanal 28 aus der Brennstoffzelle lentfernt werden.

Die Dicke der hydrophoben Schicht 4 ist hierbei auf ein Optimum zwischen einem niedrigen elektrischen Übergangswiderstand von der Kathode 11 bzw. der Anode 7 zur Bipolarplatte 5 und einer hohen Hydrophobizität der Schicht 4 eingestellt und beträgt 0,5 nm bis 5 nm. Die Einstellung der Schichtdicke erfolgt hierbei durch entsprechende Verdünnung des hydrophobierenden Materials in einem geeigneten Lösemittel.

Eine Bipolarplatte, die eine zuverlässige Entfernung von Wasser aus der Brennstoffzelle und gleichzeitig einen geringen elektrischen Übergangswiderstand zu einer angrenzenden Elektrode ermöglicht, ist mit folgenden Schritten erzielbar:
2,5 ml einer 6 (Gewichts-)%igen Lösung von Teflon®AF 1601-S6 des Herstellers DuPont Fluoroproducts werden im herstellerseitig gelieferten Lösemittel FC75 in einem 500 ml Messkolben mit einem perhalogenierten Lösemittel FC77 (Hersteller: 3M) auf 500 ml aufgefüllt und 12 Stunden bei Raumtemperatur mittels eines Magnetrührers gerührt. Die Lösung ist dann gebrauchsfertig und wird auf eine gereinigte und getrocknete Bipolarplatte aus einer Nickelbasislegierung, versehen mit einer Kontaktbeschichtung aus Gold, mittels Schwamm durch gleichmäßige Verteilung aufgetragen. Anschließend erfolgt eine Trocknung der Schicht für 30 Minuten bei 100 °C im Umluftofen. Zurück bleibt eine Schicht mit einer Dicke von ca. 0,6 nm auf der Bipolarplatte.

Derartige behandelte Bipolarplatten zeigen im Vergleich zu unbehandelten Platten ein deutliche abweichendes Verhalten gegenüber Wasser, denn aufgebrachtes Wasser bildet Tröpfchen, die nur gering auf der Oberfläche der Bipolarplatte haften und mit einem nur geringen Gasstrom weggeblasen werden können.

Mit derartig modifizierten Bipolarplatten werden mit geeigneten Membran-Elektroden-Einheiten Shortstacks aufgebaut und im Wasserstoff/Sauerstoffbetrieb betrieben. Es ergeben sich charakteristische Brennstoffzellendaten wie z.B. eine Stromdichte von 1 A/cm2 bei einer Spannung von 0,7 V für eine Einzelzelle bei Betriebszeiten von mehr als 1500 Stunden. Die elektrischen Daten unterscheiden sich somit nicht von denen von entsprechenden Brennstoffzellen, die mit herkömmlichen Bipolarplatten betrieben werden. Dies zeigt, dass aufgrund der geringen Dicke der hydrophoben Schicht der Übergangswiderstand zwischen der Biporplatte und einer anliegenden Elektrode nicht oder nur sehr gering beeinflusst wird. Auf der Oberfläche der Bipolarplatten ist hierbei keine Ansammlung von Wasser feststellbar. Dies zeigt, dass das Wasser zuverlässig aus der Brennstoffzelle abgeführt wird.

## Patentansprüche

1. Bipolarplatte (5) für Brennstoffzellen, wobei die Bipolarplatte an ihrer Oberfläche mit einer Schicht (4) aus einem hydrophobierenden Material versehen ist, wobei das hydrophobierende Material ganz oder teilweise aus einem amorphen Fluoropolymer besteht, **dadurch gekennzeichnet, dass** das hydrophobierende Material in einem Lösemittel lösbar ist.

2. Bipolarplatte (5) nach Anspruch 1,
bei der die Dicke der Schicht (4) auf ein Optimum zwischen einem niedrigen elektrischen Übergangswiderstand zu einer anliegenden Elektrode (7, 11) und einer hohen Hydrophobizität eingestellt ist.

3. Bipolarplatte (5) nach einem der vorhergehenden Ansprüche mit einer Dicke der Schicht (4) im Bereich von 0,1 nm bis 50 nm.

4. Bipolarplatte (5) nach Anspruch 3,
mit einer Dicke der Schicht (4) im Bereich von 0,5 nm bis 5 nm.

5. Bipolarplatte (5) nach einem der vorhergehenden Ansprüche, wobei die Bipolarplatte (5) aus einer Metalllegierung, insbesondere einer Nickelbasislegierung, besteht.

6. Bipolarplatte (5) nach einem der vorhergehenden Ansprüche mit einer hochleitfähige Kontaktschicht (6) aus einem Edelmetall, insbesondere aus Gold, zwischen der Bipolarplatte (5) und der Schicht (4) aus dem hydrophobierenden Material.

7. Brennstoffzelle (1,2) mit einer Membran-Elektroden-Einheit (3) und einer elektrodenseitig die Membran-Elektroden-Einheit (3) elektrisch kontaktierenden Bipolarplatte (5) nach einem der vorhergehenden Ansprüche.

## Claims

1. Bipolar plate (5) for fuel cells, with the bipolar plate being provided on its surface with a layer (4) of a hydrophobing material, with the hydrophobing material consisting entirely or partly of an amorphous fluoropolymer, **characterised in that** the hydrophobing material is soluble in a solvent.

2. Bipolar plate (5) in accordance with claim 1,
in which the thickness of the layer (4) is adjusted to an optimum between a low electrical contact resistance to an adjoining electrode (7, 11) and a high hydrophobicity.

3. Bipolar plate (5) in accordance with one of the previous claims, with a thickness of the layer (4) ranging from 0.1 nm to 50 nm.

4. Bipolar plate (5) in accordance with claim 3,
with of a thickness of the layer (4) ranging from 0.5 nm to 5 nm.

5. Bipolar plate (5) in accordance with one of the previous claims, with the bipolar plate (5) consisting of a metallic alloy, especially a nickel-based alloy.

6. Bipolar plate (5) in accordance with one of the previous claims, with a highly-conductive contact layer (6) made of a noble metal, especially gold, between the bipolar plate (5) and the layer (4) made of the hydrophobing material.

7. Fuel cell (1,2) with a membrane electrode unit (3) and, on the electrode side a bipolar plate (5) electrically contacting the membrane-electrode unit (3) in accordance with one of the previous claims.

## Revendications

1. Plaque ( 5 ) bipolaire pour les piles à combustible, la plaque bipolaire étant munie sur sa surface d'une couche ( 4 ) en un matériau rendant hydrophobe, le matériau rendant hydrophobe étant constitué en tout ou partie d'un polymère fluoré amorphe, **caractérisée en ce que** le matériau rendant hydrophobe est soluble dans un solvant.

2. Plaque ( 5 ) bipolaire suivant la revendication 1,
dans laquelle l'épaisseur de la couche ( 4 ) est réglée sur un optimum entre une résistance de contact petite avec une électrode ( 7, 11 ) appliquée et un grand caractère hydrophobe.

3. Plaque ( 5 ) bipolaire suivant l'une des revendications précédentes,
ayant une épaisseur de la couche ( 4 ) allant de 0,1 nm à 50 nm.

4. Plaque ( 5 ) bipolaire suivant la revendication 3,
ayant une épaisseur de la couche ( 4 ) allant de 0,5 nm à 5 nm.

5. Plaque ( 5 ) bipolaire suivant l'une des revendications précédentes,
dans laquelle la plaque ( 5 ) bipolaire est en un alliage métallique, notamment en un alliage à base de nickel.

6. Plaque ( 5 ) bipolaire suivant l'une des revendications précédentes,
ayant une couche ( 6 ) de contact très conductrice en un métal précieux, notamment en or, entre la plaque ( 5 ) bipolaire et la couche ( 4 ) en le matériau rendant hydrophobe.

7. Pile ( 1, 2 ) à combustible comprenant une unité ( 3 ) membrane-électrode et une plaque ( 5 ) bipolaire, suivant l'une des revendications précédentes, entrant en contact électrique du côté de l'électrode avec l'unité ( 3 ) membrane-électrode.
